# EUROPEAN PATENT APPLICATION

(11) **EP 2 081 115 A1**
(43) Date of publication of application: **22.07.2009**
(21) Application number: 09150409.2
(22) Date of filing: 13.01.2009
(51) Int. Cl.: G06F 11/00, G11B 19/04, G11B 33/08

(54) **Durable data storage system and method**

(30) Priority: 16.01.2008 KR 20080004899; 07.04.2008 US 98914
(71) Applicant: Samsung Electronics Co., Ltd., Suwon-si Gyeonggi-do (KR)
(72) Inventor: Jang, Jun-ho, Paldal-gu Suwon-si Gyeonggi-do (KR); Lee, Jun-beom, Gyeonggi-do (KR); Kwon, Oh-song, Suwon-si Gyeonggi-do (KR); Ko, Eun-ju, Seoul (KR)
(74) Representative: Grünecker, Kinkeldey, Stockmair & Schwanhäusser Anwaltssozietät

(57) **Abstract**

A method of operating a storage system, comprising: issuing a first command to write a first data to a first nonvolatile storage device; writing the first data to a second nonvolatile storage device if write condition is unstable; retrieving the first data from the second nonvolatile storage device; and writing the first data to the first nonvolatile storage device during a stable write condition, wherein whether write condition is stable is determined based on one of a sensor output or a memory access status signal, and wherein the memory access status signal is one of a predetermined value of retries, idling, access commands, or any combination thereof

## Description

### CROSS-REFERENCE TO RELATED APPLICATIONS

This application claims priority to Korean Patent Application No. 10-2008-0004899, filed on January 16, 2008, in the Korean Intellectual Property Office (KIPO), the disclosure of which is incorporated by reference herein in its entirety.

### Technical Field

The present invention relates to a data storage system and a method of controlling data access thereof, and more particularly to a data storage system and a method of controlling data access in an unstable environment.

### Discussion of Related Art

Devices using various types of data write media such as optical disks, magnetic disks and tapes and semiconductor memories are known as data storage devices. There are now a large selection of nonvolatile storage devices, i.e., storage devices that retain stored data when power applied to the storage device is lost. Among them, hard disk drives (HDDs) have become widely used as storage devices for computers because of its high storage capacity. Portable or smaller version HDDs have also become popular for use in mobile and handheld hosts such as portable navigation systems, mobile phones, MP3 players, PDAs, and in digital still cameras (DSC) and the like.

HDDs record data by magnetizing a ferromagnetic material coated on disks and read the data back by detecting the magnetization of the material. An HDD has a spindle which holds one or more circular disks commonly referred to as platters, onto which the data is recorded. The platters are spun at very high speeds. Data is written to a platter as it rotates past read-and-write heads disposed very close over the magnetic surface. The read-and-write head is mounted on a common arm to detect and modify the magnetization of the material immediately under it. An actuator arm moves the heads on an arc roughly radially across the platters as they spin, allowing each head to access almost the entire surface of the platter as it spins. The arm is moved using a servo motor. The magnetic surface of each platter is divided into many small micrometer-sized magnetic regions, each of which is used to encode a single binary unit of information.

Due to the various mechanical movements under precise electronic control involved in data read/write from/to an HDD, there is a likelihood of erroneous data read/write if the HDD operates in an unstable environment. Vibration or shock, such as from a bumpy transport or from impact on the ground when a host device falls, can render components of the HDD to fail. Vibration can also be caused by mechanical resonance of the actuator, when a frequency of this residual vibration takes a value near a sampling frequency of the servo. This vibration cannot be detected and therefore cannot be corrected by the servo. If data is written to a magnetic disk in a state in which the actuator and the head element vibrate, there is likelihood of erroneous off-track read or write. For example, if off-track condition occurs during write, data in another track may be overwritten.

To prevent this off-track occurrence, a variety of methods have been developed. One method is to set an acceleration sensor in the HDD to detect vibration and shock. In this method, write is halted if vibration or shock is detected by the acceleration sensor. However, this method deteriorates the performance of the HDD.

Further, if noise is introduced into the output signal of the sensors while there is no vibration, compensation is made based on the noise-introduced signal, resulting in moving the head to a wrong position. Such prior art HDDs having sensors installed therein to detect vibration may encounter this problem and data cannot accurately be read/written.

There are a number of other causes of unstable conditions. Dust and other sources of contamination on the heads or the platters can cause erroneous data read or write. The small size of each data region renders them susceptible to lost of magnetic state due to thermal effects. High temperature due to lack of air circulation or surrounding hot components, or erratic power supply can cause failure in the servo, actuator arm, and read-and-write head components.

HDD vibration can be removed somewhat by use of mounting structures having shock absorbing or vibration dampening features. The use of different storage devices to complement use of HDDs to circumvent vibration or other HDD operational issues has also been employed. For example, US patent 6,877,074 discloses use of an MRAM in place of a HDD when a main PC is set in a suspend or hibernation mode during mobile use. The MRAM is capable of withstanding higher levels of vibration than a hard disk drive (HDD) because the MRAM has no moving parts. A power supply controller keeps power supplied to the MRAM and stops the supply of power to the HDD during suspend mode operation.

Other means of preventing HDD data misread include mechanism to physically parking the read-and-write head components when an unstable operating condition is encountered.

In operating environment prone to unstable conditions, the use of Hybrid Hard Drives (HHDs) can also be considered. An HHD is a type of HDD wherein another nonvolatile storage device, such as a flash memory, is used as a buffer to cache data during normal use. By using this large buffer for non-volatile data storage, the moving components of the hard drive, such as the platters, are at rest most of the time. During this time, any data that the user must write to the hard drive is written instead to the buffer. While working on a text document, for example, or browsing through the Internet, any temporary save files or the browser's disk cache will be saved to the buffer, instead of being written to the hard drive. The second instance is when the user must access data from the hard drive that is not already stored in the buffer. In this case, the platters must spin up to access the file and place it onto the buffer, whereupon the platters will return to an off state. Because the hybrid drive utilizes nonvolatile flash memory, as opposed to volatile memory (such as RAM), the buffer is able to retain all the data even in the event of a sudden power failure, and can even store boot-up data into the buffer.

Despite the advantages of use of HHDs as discussed above, there is still a need for a data storage system and method that is capable of preserving data to be written to a nonvolatile memory device including detecting an unstable memory access condition.

### Summary of the Invention

A method of operating a storage system is provided, comprising: issuing a first command to write a first data to a first nonvolatile storage device; writing the first data to a second nonvolatile storage device if write condition is unstable; retrieving the first data from the second nonvolatile storage device; and writing the first data to the first nonvolatile storage device during a stable write condition. The method may further include: issuing a second command to write a second data to the first nonvolatile storage device prior to expiration of idling for a preset time period; and writing to the first nonvolatile storage device the first data and the second data in one write operation during the stable write condition. The method may further include merging the first data and the second data by storing the first data and the second data in a buffer. The method may further include determining whether the first data and the second data are to be written in the same track of the HDD prior to writing to the HDD.

Preferably, the first nonvolatile storage device has a slower average access time and a higher capacity than the second nonvolatile storage device. The first nonvolatile storage device can be an HDD and the second storage device can be a flash memory. Alternatively, the first nonvolatile storage device is one of an HDD, SSD , PRAM, RRAM, MRAM or MLC type memory, and the second nonvolatile storage device is one of an SSD, PRAM, RRAM, MRAM, SLC type memory or a flash memory.

The first command to write the first data can be issued from a host having a processor, wherein the host is one of a handheld processing device, a mobile cellular device, an MP3 player, a DSC, a PC, or a game console.

According to one embodiment of the present invention, the step of determining whether the operating condition of a data storage apparatus is stable includes use of one or more of vibration, temperature, or voltage sensing devices known to one skilled in the art.

According to at least another embodiment of the present invention, the step of determining whether the operating condition of a data storage apparatus is stable includes use of memory access status signals that are communicated between the controller and the memory device.

According to another embodiment of the present invention, a method of operating a storage system is provided, comprising: issuing a first command to write a first data to a first nonvolatile storage device; writing the first data to a second nonvolatile storage device if a predetermined retry condition exists; and retrieving the first data from the second nonvolatile storage device and writing the first data to the first nonvolatile storage device during a stable write condition, wherein the predetermined retry condition is a number of retries greater than 75.

A method according to this embodiment may further include: issuing a second command to write a second data to the first nonvolatile storage device; and writing to the first nonvolatile storage device the first data and the second data in one write operation during the stable write condition, wherein the first nonvolatile storage device is an HDD and the second nonvolatile storage device is a flash memory. The method may further include determining whether the first data and the second data are to be written in the same track of the HDD prior to writing to the HDD; and merging the first data and the second data by storing the first data and the second data in a buffer.

According to still another embodiment of the present invention, a method of operating a storage system is provided, comprising: issuing a first command to write a first data to a first nonvolatile storage device; writing the first data to a second nonvolatile storage device if write condition is unstable; issuing a second command to write a second data to the first nonvolatile storage device; retrieving data from the second nonvolatile storage device; determining a ratio between occurrences of retries and occurrences of commands; and writing the second data to the second nonvolatile storage device if the ratio exceeds a preset value, and writing the second data to the first nonvolatile storage device if the ratio is not exceeded, wherein the preset ratio value is five or greater.

A data storage system is also provided, comprising: a first nonvolatile storage device; a second nonvolatile storage device; and a host having a controller issuing a first command to write a first data to the first nonvolatile storage device, writing the first data to a second nonvolatile storage device if write condition is unstable, and retrieving the first data from the second nonvolatile storage device to write to the first nonvolatile storage device during a stable write condition. The host can further cause the controller to issue a second command to write a second data to the first nonvolatile storage device and writing to the first nonvolatile storage device the first data and the second data in one write operation during the stable write condition, wherein the host is one of a handheld processing device, a mobile cellular device, an MP3 player, a DSC, a PC, or a game console.

Preferably, whether memory access condition is construed as stable is determined based on one of a sensor output or a memory access status signal, wherein the memory access status signal is one of a predetermined value of retries, idling, access commands, or any combination thereof.

### Brief Description of the Drawings

Preferred embodiments of the present disclosure will be described below in more detail, with reference to the accompanying drawings:
FIG. 1 is a block diagram which shows the configuration of an exemplary storage system according to an embodiment of the present invention.
Fig. 2 is a flow diagram illustrating a method of operating a storage system according to an exemplary embodiment of the present invention.
Fig. 3 shows a flow process of an exemplary method of operating a data storage system wherein an "Idle" status signal is used to construe an operating condition to be stable.
Fig. 4 shows a flow process of an exemplary method of operating a data storage system wherein a 'Retry' status signal is used to construe an operating condition to be stable.
Fig. 5 shows a flow process of another exemplary method of operating a data storage system according to the present invention.

### Detailed Description of Exemplary Embodiments

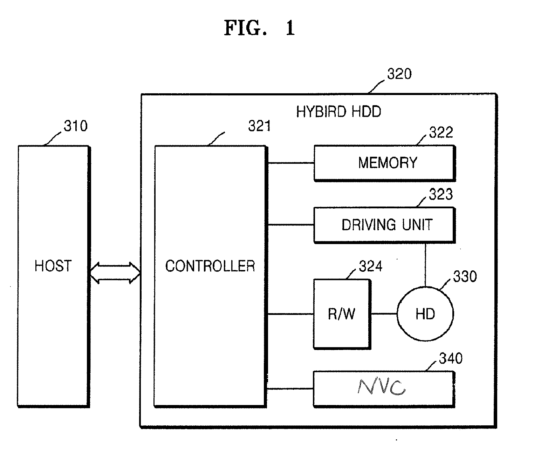

With reference to the drawings, the following will provide a detailed description of exemplary embodiments of the present invention. While the present invention is applicable to any data storage apparatus operating in an unstable environment, an illustrative embodiment which moves a head to read/write data on a recording medium is first described; more specifically, the present embodiment is described with a hybrid hard disk drive (HHD), an example of a data storage device. FIG. 1 is a block diagram which schematically shows the configuration of HHD 320. As shown in FIG. 1, HHD 320 includes a controller 321, which is configured with capability to control data read/write to the various data storage devices including a hard disk HD 330, a memory 322, which can be used to store codes executable by the controller to coordinate and effect data read/write, and a nonvolatile cache NVC 340. To read or write data from or to the HD 330, the controller 321 controls driving unit 323 to drive the read-and-write head(s) of the HD 330. Data to be read or written is transferred through read/write R/W unit 324. The controller 321 also includes a host interface (not shown) to interface with host 310. The host 310 can be any device utilizing durable data storage such as a personal computer PC, a laptop, a digital video recorder DVR, or a handheld mobile electronic appliance such as a mobile phone, a PDA, a digital camera, an MP3 player, and the like. The host 310 issues commands to read or write data to or from the data storage devices in HHD 320 via the host interface of the controller 321.

According to an exemplary embodiment of the present invention, when an unstable operating condition exists, which can be any one of a vibration, high temperature, erratic supplied voltage conditions, the controller 321 causes the data that was intended to be written to HD 330 to write instead to NVC 340. During this mode, the NVC 340 is thus also used to temporarily buffer data, until operating condition return to stable. Then, the data buffered at NVC 340 is retrieved and written into the HD 330.

According to an alternative embodiment of the present invention, if during an unstable condition in which a first command to write data has issued from the host 310, and the data has been written into NVC 340 for temporary storage, and another command to write data is issued by the host 310, the second data is also written into the NVC 340 when it is serving as a temporary buffer. When the unstable condition no longer exists, the first and second data are retrieved and written to the HD 330. According to the present embodiment, a Flash Translation Layer (FTL) is installed either in memory 322 or within controller 321. The FTL is used to translate the data storage location information, e.g., sector/track information for the HD 330 and page information for the NVC 340. According to still another embodiment of the present invention, both the first and the second data are written to the HD 330 in one write operation. According to this embodiment, it is preferred that the first and the second data are merged in the NVC 340. Further, it is preferred that prior to writing to the HD 330, the cylinder and track of the HD 330 where the first and second data are to be written is determined. If the first and second data are to be written to the same track, the merged first and second data is written to the HD 330 in one write operation.

While the present embodiment of the present invention is explained with the NVC 340 serving both as a cache and a temporary buffer, it is to be understood that a separate nonvolatile memory device distinct from the NVC 340 can be used to serve as the temporary buffer. In such embodiment, the HD 330 device need not be serviced by an NVC, and operates essentially as a simple hard disk drive HDD without the cache feature.

Although the embodiments described above are applicable to a data storage apparatus which moves a head to read/write data on a recording medium, the present invention is applicable to any data storage medium operating in an unstable environment. According to at least one embodiment of the present invention, when a first nonvolatile memory is subject to an unstable condition, the data to be written to the first nonvolatile memory is temporarily written to a second nonvolatile memory, which acts as a data buffer. When the unstable condition no longer exists, data is retrieved from the buffer and written into the first nonvolatile memory. The use of a nonvolatile storage device as a buffer ensures that data will be retained even if the power supplied to the data storage apparatus is lost. It is preferred that the second nonvolatile memory that serves as a buffer has operating characteristics superior to the characteristics of the first nonvolatile memory given the same operating conditions, i.e., data can be safely written to the second nonvolatile memory during operating conditions that data cannot be safely written to the first nonvolatile memory. It is further preferred that the first nonvolatile storage device has a slower average access time and a higher capacity than the second nonvolatile storage device. In the exemplary embodiment shown in Fig. 1, the first nonvolatile storage device is an HDD and the second nonvolatile storage device (buffer) is a flash memory.

In alternate embodiments, the first nonvolatile storage device is one of an HDD, SSD (Solid State Disks), PRAM (Phase-change RAM), RRAM (Resistive RAM), MRAM (Magnetoresistive RAM) or MLC (Multi-Level Cell) type memory, and the second nonvolatile storage device is one of an SSD, PRAM, RRAM, MRAM, SLC (Single Level Cell) type memory or a flash memory.

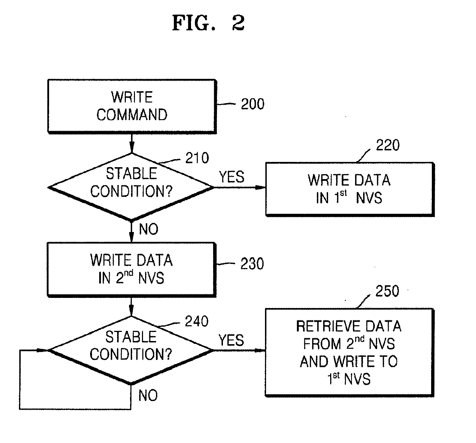

Fig. 2 is a flow diagram illustrating a method of operating a storage system according to an exemplary embodiment of the present invention. A host issues a first command to write a first data to a first nonvolatile storage device (step 200). A determination is made whether the operating condition is stable (step 210). If operating condition is considered stable, the first data is written into the first nonvolatile storage device (step 220); if not, the first data is written to a second nonvolatile storage device (step 230). The operating condition is monitored (step 240), and when it is determined that stable write condition exists, the first data is retrieved from the second nonvolatile storage device (step 250) and written to the first nonvolatile storage device (step 260).

According to one embodiment of the present invention, the step of determining whether the operating condition of a data storage apparatus is stable includes use of one or more of vibration, temperature, or voltage sensing devices known to one skilled in the art. For example, an acceleration sensor is used to detect vibration or shock, a thermostat is used to detect high temperature, and a voltage divider circuit to detect voltage drop.

According to at least another embodiment of the present invention, the step of determining whether the operating condition of a data storage apparatus is stable includes use of memory access status signals that are communicated between the controller and the memory device. As an example, when a data write to an HDD command is processed while the HDD is experiencing a shock condition, such as when the host is dropped, the HDD should report an error condition, such as DAM and ECC error, and the HDD access command set issued from the controller may include a number of 'Retries' to write to the HDD before a timeout or a write failure is declared. According to at least one embodiment of the present invention, disk drive access status signals, such as the number of 'Retry', 'Idle', 'disk access command' cycles, or any combination thereof are monitored, and whether the operating condition is stable is construed based on one or more of the disk drive access status signals.

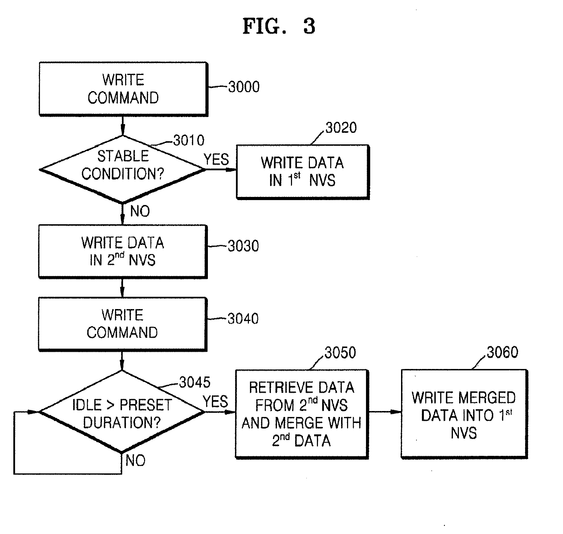

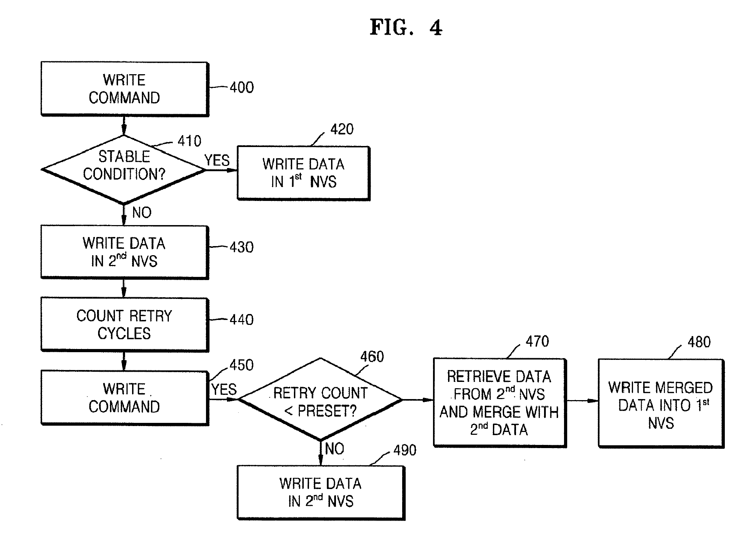

Fig. 3 shows a flow process of an exemplary method of operating a data storage system wherein an idling status signal is used to construe an operating condition to be stable. A host issues a first command to write a first data to a first nonvolatile storage device (step 3000). A determination is made whether the operating condition is construed as stable based on the duration of the status signal 'Idle' (step 3010). If operating condition is considered stable, the first data is written into the first nonvolatile storage device (step 3020); if not, the first data is written to a second nonvolatile storage device (step 3030). The duration of the HDD remaining in 'Idle' state is monitored. If the host issues a second command to write a second data to the first nonvolatile storage device (step 3040) prior to expiration of a preset time that the HDD remain in 'Idle' (step 3045), such as for five seconds, the first data is retrieved from the second nonvolatile storage device, and the first data and the second data are merged (step 3050). The data merging can be performed in the second nonvolatile storage device or in a separate memory device used as a buffer. The merged first data and the second data are then stored in the first nonvolatile storage device in one write operation (step 3060). Fig. 4 shows a flow process of an exemplary method of operating a data storage system wherein 'Write Verify' routines, such as use of 'Retry' status signal to construe an operating condition to be stable. A host issues a first command to write a first data to a first nonvolatile storage device (step400). A determination is made whether the operating condition is construed as stable based on the count of the number of cycles of the status signal 'Retry' (step 410). If operating condition is considered stable, the first data is written into the first nonvolatile storage device (step 420); if not, the first data is written to a second nonvolatile storage device (step 430). The number of cycles of the 'Retry' request is counted (step 440). A count of greater than 75 retries can be construed as an unstable operating condition. A count of 100 retries may also be used as the preset duration for a determination of unstable operating condition. If the host issues a second command to write a second data to the first nonvolatile storage device (step 450) and operating condition is construed to be stable (step 460), the first data is retrieved from the second nonvolatile storage device, and the first data and the second data can be merged (step 470). The data merging can be performed in the second nonvolatile storage device or in a separate memory device used as a buffer. The merged first data and the second data are then stored in the first nonvolatile storage device in one write operation (step 480). If the second command to write a second data to the first nonvolatile storage device issues, and the write condition is still construed as unstable based on the preset Retry count, then the second data is written into the second nonvolatile storage device instead (step 490).

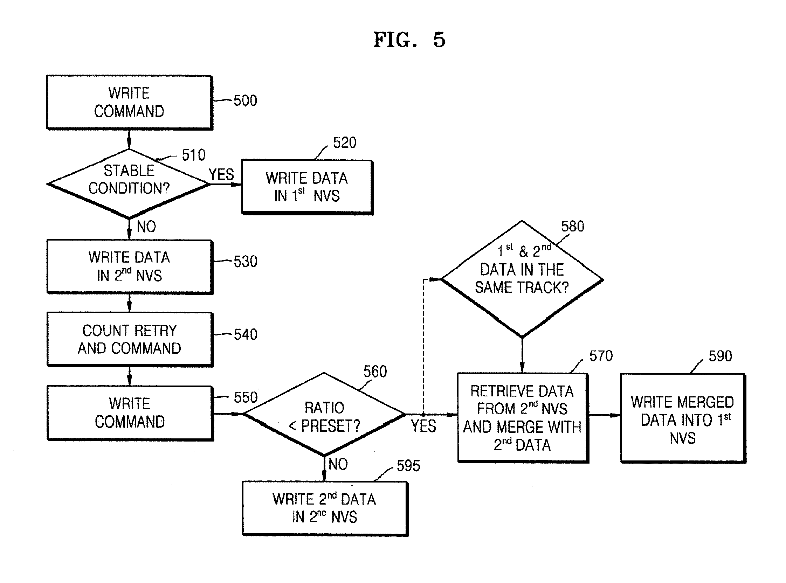

According to still another embodiment of operating a storage system of the present invention, a ratio between occurrences of retries and occurrences of disk access commands is used as criteria for construing whether operating condition is stable. Fig. 5 shows a flow process of this exemplary method. A host issues a first command to write a first data to a first nonvolatile storage device (step 500). A determination is made whether the operating condition is construed as stable (step 510). If operating condition is considered stable, the first data is written into the first nonvolatile storage device (step 520); if not, the first data is written to a second nonvolatile storage device (step 530). The number of occurrences of retries and occurrences of disk access commands are counted and a ratio between the two numbers of occurrences are determined (step 540). For example, a ratio of five or greater occurrences of retries to one occurrence of disk access command can be construed as an unstable operating condition. If the host issues a second command to write a second data to the first nonvolatile storage device (step 550) and operating condition is construed to be stable (step 560), the first data is retrieved from the second nonvolatile storage device (step 570), and the first data and the second data are then stored in the first nonvolatile storage device in one write operation (step 590). According to an alternative embodiment, it is determined whether the first data and the second data are to be written to the same track of the first nonvolatile storage device prior to writing the first and second data to the first nonvolatile storage device(step 580) and if so, the first data and the second data are merged. The data merging can be performed in the second nonvolatile storage device or in a separate memory device used as a buffer. If the second command to write a second data to the first nonvolatile storage device issues, and the write condition is still construed as unstable based on the preset ratio, then the second data is written into the second nonvolatile storage device instead (step 595).

While the present invention has been described with respect to exemplary embodiments thereof, it is to be understood that the present invention is not limited to the embodiments described so far. Although one embodiment is a data storage apparatus which moves a head to read/write data on a recording medium, the present invention is applicable to any data storage medium, such as the use of flash memories as the mass storage medium, operating in an unstable environment. Although memory Write Verify routines and access status signals such as "Idle" and "Retry" have been specifically stated as criteria usable to construe a stable memory access condition, it is understood by one ordinary skilled in the art that any other Write Verify routines including Incremental Step Pulse Program (ISPP) for flash memories and other memory access status signals can be used as criteria for construing a stable memory access condition. The scope of the invention should, therefore, be determined not with reference to the above descriptions, but instead should be determined with reference to the appended claims along with their full scope of equivalents.

## Claims

1. A method of operating a storage system (320), comprising:
issuing a first command to write a first data to a first nonvolatile storage device (330); writing the first data to a second nonvolatile storage device (340) if write condition is unstable;
retrieving the first data from the second nonvolatile storage device (340); and
writing the first data to the first nonvolatile storage device (330) during a stable write condition.

2. The method of claim 1, wherein a stable write condition is construed based on a predetermined value of retries, a preset duration of idling, a predetermined value of access commands, or any combination thereof

3. The method of claim 1 or 2, further including:
issuing a second command to write a second data to the first nonvolatile storage device; and
writing to the first nonvolatile storage device the first data and the second data in one write operation during the stable write condition.

4. The method of claim 3, further including merging the first data and the second data by storing the first data and the second data in a buffer.

5. The method of claim 3 or 4 in combination with claim 2, comprising:
determining a ratio between occurrences of retries and occurrences of commands; and
writing the second data to the second nonvolatile storage device if the ratio exceeds a preset value, and writing the second data to the first nonvolatile storage device if the ratio is not exceeded.

6. The method of one of claims 1 to 5, wherein the first nonvolatile storage device has a slower average access time and a higher capacity than the second nonvolatile storage device.

7. The method of one of claims 1 to 6, wherein the first nonvolatile storage device is one of an HDD, SSD, PRAM, RRAM, MRAM or MLC type memory, and the second nonvolatile storage device is one of an SSD, PRAM, RRAM, MRAM, SLC type memory or a flash memory.

8. The method of claim 7 in combination with claim 3, further including determining whether the first data and the second data are to be written in the same track of the HDD prior to writing to the HDD.

9. The method of claim 1, wherein the first command to write the first data is issued from a host having a processor, preferably wherein the host is one of a handheld processing device, a mobile cellular device, an MP3 player, a DSC, a PC, or a game console.

10. A data storage system (320) comprising:
a first nonvolatile storage device (330);
a second nonvolatile storage device (340); and
a controller (321) issuing a first command to write a first data to the first nonvolatile storage device (330), writing the first data to a second nonvolatile storage device (340) if write condition is unstable, and retrieving the first data from the second nonvolatile storage device (340) to write to the first nonvolatile storage device (330) during a stable write condition.

11. The data storage system according to claim 34, wherein the controller further issues a second command to write a second data to the first nonvolatile storage device and writing to the first nonvolatile storage device the first data and the second data in one write operation during the stable write condition.

12. The data storage system according to claim 10 or 11, wherein the first nonvolatile storage device has a slower average access time and a higher capacity than the second nonvolatile storage device.

13. The data storage system according to one of claims 10 to 12, wherein the first nonvolatile storage device is one of an HDD, SSD, PRAM, RRAM, or MRAM, and the second nonvolatile storage device is one of an SSD, PRAM, RRAM, MRAM, or a flash memory.

14. The data storage system according to one of claims 10 to 13, wherein the data storage system is comprised in a host and the host is one of a handheld processing device, a mobile cellular device, an MP3 player, a DSC, a PC, or a game console.

15. The data storage system according to one of claims 10 to 14, wherein whether write condition is stable is determined based on one of a sensor output or a memory access status signal, preferably wherein the memory access status signal is one of a predetermined value of retries, idling, access commands, or any combination thereof.
